# EUROPÄISCHE PATENTSCHRIFT

(11) **EP 0 569 841 B1**
(45) Veröffentlichungstag und Bekanntmachung des Hinweises auf die Patenterteilung: **06.08.1997**
(21) Anmeldenummer: 93107300.1
(22) Anmeldetag: 05.05.1993
(51) Int. Cl.: B05B 15/12, B01D 17/02

(54) **Vorrichtung zum Austragen von Wachspartikeln aus Umwälzwasser von Spritzkabinen**
Device for separating wax particles from the circulating water of a spray booth
Dispositif de séparation de particules de cire de l'eau de circulation d'une cabine de pulvérisation

(30) Priorität: 11.05.1992 DE 4215396
(43) Veröffentlichungstag der Anmeldung: 18.11.1993
(73) Patentinhaber: Dürr Systems GmbH, 70435 Stuttgart (DE)
(72) Erfinder: Bhatnagar, Satpal, W-7143 Vaihingen/Rossw. (DE); Gonser, Ralf, W-7000 Stuttgart 50 (DE); Lorenzen, Joachim, W-7000 Stuttgart 1 (DE); Tobisch, Wolfgang, W-7000 Stuttgart 1 (DE)
(74) Vertreter: Hoeger, Stellrecht & Partner

(56) Entgegenhaltungen:
- WO-A-88/00856
- US-A- 3 598 501

## Beschreibung

Die Erfindung betrifft eine Vorrichtung zum Austragen von Partikeln aus Umwälzwasser von Spritzkabinen, umfassend einen Systemtank, welchem das von der Spritzkabine kommende Umwälzwasser über einen Einlauf zuführbar ist, wobei in dem Systemtank die Partikel in eine oberflächennahe Schicht aufschwimmen, und einen im Systemtank angeordneten Einlaß für eine die oberflächennahe Schicht umfassende schwimmende Phase.

Aus der WO-A-8 800 856 ist eine derartige Vorrichtung zum Austragen von Partikeln aus Umwälzwasser von Spritzkabinen bekannt, diese offenbart jedoch lediglich ein Wehr zur Entfernung der schwimmenden Phase und nur der über das Wehr gelaufene Teil der schwimmenden Phase wird mittels einer Pumpe entfernt.

Der Erfindung liegt daher die Aufgabe zugrunde, eine Vorrichtung der gattungsgemäßen Art derart zu verbessern, daß ein effizienter Austrag von Wachspartikeln aus dem Umwälzwasser möglich ist.

Diese Aufgabe wird bei einer Vorrichtung der eingangs beschriebenen Art erfindungsgemäß dadurch gelöst, daß in dem Systemtank auf den Einlauf folgend eine Separationszone vorgesehen ist, in welcher die aus Wachspartikeln gebildeten Partikel in die oberflächennahe Schicht aufschwimmen, daß auf einer dem Einlauf gegenüberliegenden Seite der Separationszone der Einlaß angeordnet ist und daß der Einlaß als die die oberflächennahe Schicht umfassende schwimmende Phase absaugender Einlaß einer Absaugung ausgebildet ist.

Durch die erfindungsgemäße Lösung wird erreicht, daß bereits in dem Systemtank eine Separation der Wachspartikel in der Separationszone auftritt, nämlich dadurch, daß die Wachspartikel in der Separationszone in die oberflächennahe Schicht aufschwimmen, so daß in dieser eine Aufkonzentration der Wachspartikel erfolgt, die dann zusammen vorzugsweise mit der sich auf der Umwälzwasseroberfläche bildenden Schaumschicht abgesaugt wird. Damit ist einerseits keine Notwendigkeit dafür gegeben, Entschäumer dem Umwälzwasser zuzugeben und andererseits ist bereits nach dem Systemtank eine Aufkonzentration der Wachspartikel in der abgesaugten Phase erfolgt.

Erfindungsgemäß ist der Einlaß so anzuordnen, daß mit diesem stets eine Absaugung der schwimmenden Phase, das heißt der oberflächennahen Schicht und der auf der Oberfläche schwimmenden Schwimm- oder Schaumschicht, erfolgt. Hierzu wäre es beispielsweise möglich, die Menge des Umwälzwassers im Systemtank zu regulieren und somit eine konstante Höhe der Umwälzwasseroberfläche zu erreichen.

Noch einfacher ist es jedoch, wenn der Einlaß so in dem Systemtank angeordnet ist, daß mit diesem eine Absaugung der schwimmenden Phase unabhängig von dem Stand der Umwälzwasseroberfläche im Systemtank erfolgt.

Besonders einfach läßt sich dies konstruktiv dadurch realisieren, daß in dem Systemtank eine den Einlaß aufweisende Schwimmpumpe angeordnet ist.

Um außerdem von den Spritzkabinen kommenden Fremdschmutz nicht in den Systemtank einzuleiten, in welchem er die Aufkonzentration des Wachses in der oberflächennahen Schicht stören würde, ist vorgesehen, daß dem Einlauf ein Fremdschmutzabscheider vorgeschaltet ist.

Zweckmäßigerweise ist dieser Fremdschmutzabscheider so ausgebildet, daß er absinkende und aufschwimmende Grobpartikel aus dem Umwälzwasser abtrennt.

Günstigerweise ist hierzu vorgesehen, daß der Fremdschmutzabscheider eine Wanne zur Aufnahme von absinkendem Grobschmutz aufweist.

Ferner ist es ebenfalls günstig, wenn ein über einem Flüssigkeitsspiegel aufschwimmende Grobpartikel zurückhaltendes Element im Fremdschmutzabscheider angeordnet ist.

Vorzugsweise ist das Element dabei so ausgebildet, daß es Öffnungen für das Umwälzwasser aufweist.

Konstruktiv besonders zweckmäßig hat sich eine Lösung erwiesen, bei welcher das Element den Einlauf in den Systemtank bildet, so daß direkt an den Fremdschmutzabscheider der Systemtank anschließt.

Hinsichtlich der Ausbildung des Einlaufs wurden bislang keine weiteren Angaben gemacht. Es hat sich als zweckmäßig erwiesen, wenn der Einlauf so ausgebildet ist, daß er eine ungefähr parallel zur Umwälzwasseroberfläche im Systemtank gerichtete Einlaufströmung erzeugt. Mit der derart gerichteten Einlaufströmung wird die Separation der Wachspartikel in der Separationszone und insbesondere das Aufschwimmen derselben unterstützt.

Eine derartige Einlaufströmung läßt sich günstigerweise dann erreichen, wenn der Einlauf mit einem die Einlaufströmung erzeugenden Leitblech versehen ist.

Darüber hinaus ist es zur Unterstützung der Wirkung der Separationszone vorteilhaft, wenn der Einlauf sich in einer Querrichtung zur Strömungsrichtung ungefähr parallel zur Umwälzwasseroberfläche über einen wesentlichen Teil der Breite der Separationszone oder des Systemtanks erstreckt, um insbesondere im wesentlichen über die ganze Breite die Einlaufströmung zu erzeugen und die Wirkung der Separationszone zu unterstützen.

Die Funktion des Fremdschmutzabscheiders ist dann besonders vorteilhaft, wenn in diesem ein Flüssigkeitsspiegel des Umwälzwassers auf einem festgelegten Niveau steht, da dann sowohl die absinkenden Grobschmutz aufweisende Wanne als auch das aufschwimmende Grobpartikel zurückhaltende Element in einfacher Weise relativ zueinander angeordnet werden können.

Um die vorstehend beschriebene gewünschte Einlaufströmung zu erzeugen ist es ferner vorteilhaft, wenn der Flüssigkeitsspiegel im Fremdschmutzabscheider auf gleicher Höhe wie die Umwälzwasseroberfläche im Systemtank oder geringfügig höher gehalten ist, so daß das Umwälzwasser aus dem Fremdschmutzabscheider nicht in den Systemtank fällt, sondern bereits im wesentlichen parallel zur Umwälzwasseroberfläche vom Fremdschmutzabscheider in den Systemtank überströmt.

Vorzugsweise ist hierzu der Fremdschmutzabscheider im Systemtank angeordnet. Um die vorstehend genannte Bedingung dabei einzuhalten ist insbesondere vorgesehen, daß der Fremdschmutzabscheider relativ zur Umwälzwasseroberfläche höhenverstellbar im Systemtank angeordnet ist.

Hinsichtlich der weiteren Behandlung der im Systemtank aufschwimmenden Phase wurden bislang keine weiteren Angaben gemacht. So sieht ein besonders bevorzugtes Ausführungsbeispiel der erfindungsgemäßen Vorrichtung vor, daß die im Systemtank aufschwimmende Phase einer physikalischen Flotationseinheit zuführbar ist, in welcher durch eine physikalische Emulsionsspaltung Wachspartikel als Flotat aufschwimmen und eine Klarphase entsteht. Der Vorteil einer derartigen Emulsionsspaltung besteht darin, daß durch ein physikalisches oder gegebenenfalls noch chemisch unterstütztes Verfahren eine weitere Aufkonzentrierung der Wachspartikel in dem Flotat möglich ist.

Alternativ oder ergänzend zur ersten Flotationseinheit ist eine thermische Flotationseinheit vorgesehen, in welcher durch eine thermische Emulsionsspaltung eine Phasentrennung erfolgt, bei welcher Wachspartikel als Flotatphase aufschwimmen und eine Klarphase entsteht.

Insbesondere läßt sich das Flotat der physikalischen Flotationseinheit noch weiter dadurch aufkonzentrieren, daß das Flotat der physikalischen Flotationseinheit in eine zweite Flotationseinheit überführbar ist. Die thermische Flotationseinheit nimmt somit insbesondere noch eine weitere Aufkonzentrierung der Wachspartikel in der Flotationsphase vor, und ergänzt die physikalische oder physikalisch/chemische Emulsionsspaltung der physikalischen Flotationseinheit noch durch eine thermische Emulsionsspaltung.

Besonders günstig ist es, wenn in der thermischen Flotationseinheit ein Aufheizen der zu spaltenden Phase auf eine Temperatur zwischen ungefähr 50°C und ungefähr 80°C erfolgt.

Um beim Aufheizen des Flotats in der thermischen Flotationseinheit Energie zu sparen ist vorteilhafterweise vorgesehen, daß die thermische Flotationseinheit in einem Gehäuse gekapselt ist.

Zweckmäßigerweise ist hierzu das Gehäuse noch zusätzlich thermisch isoliert ausgebildet.

Die Flotatphase der thermischen Flotationseinheit ist zur weiteren Aufkonzentrierung der Wachspartikel vorzugsweise noch einer Nachentwässerung zuführbar, welche im einfachsten Fall als Filter mit einem Filtersack ausgebildet ist. Es sind aber auch andere Entwässerungen wie Filterpressen, Bandfilter, Bandfilterpressen oder Zentrifugen denkbar.

Im Rahmen der vorstehenden Ausführungen wurde nicht im einzelnen darauf eingegangen, wie die Flotationseinheiten arbeiten.

Eine besonders zweckmäßige Funktion der Flotationseinheiten ergibt sich dann, wenn die zu spaltende Phase in einen Flotationsbereich der Flotationseinheit einleitbar ist, in welchem die Wachspartikel zum Flotat aufschwimmen.

Darüber hinaus ist vorteilhafterweise die Flotationseinheit mit einer Räumeinrichtung für das Flotat versehen.

Die Räumeinrichtung kann in unterschiedlichster Art und Weise arbeiten. Im einfachsten Fall ist vorgesehen, daß die Räumeinrichtung kontinuierlich das Flotat abräumt. Noch vorteilhafter ist es jedoch, wenn die Flotationseinheit eine Steuerung umfaßt, welche die Räumeinrichtung so steuert, daß sie das Flotat in Intervallen abräumt. Dies hat den großen Vorteil, daß sich während der Intervalle im Flotat die Wachspartikel zu einer sehr hohen Konzentration aufkonzentrieren können und somit das abgeräumte Flotat wesentlich konzentrierter ist als in dem Fall, in welchem ein konstantes schnelles Abräumen des Flotats erfolgt.

Ferner ist es vorteilhaft, wenn die Flotationseinheit eine Entwässerungszone aufweist und wenn die Räumeinrichtung das Flotat in die Entwässerungszone überführt. In dieser Entwässerungszone ist eine weitere Konzentrierung des Flotats dadurch möglich, daß die Flüssigkeit aus dem Flotat heraus in die Flotationseinheit zurückfließt und somit der Flüssigkeitsanteil des Flotats geringer ist.

Besonders vorteilhaft ist es, wenn das Flotat in der Entwässerungszone während einer einstellbaren Entwässerungsdauer verbleibt. Eine derartige einstellbare Entwässerungsdauer ist in unterschiedlichster Art und Weise realisierbar. So wäre es denkbar, die Entwässerungszone von der Räumeinrichtung besonders langsam durchlaufen zu lassen. Noch vorteilhafter ist es jedoch, wenn das Flotat in der Entwässerungszone während einer vorgebbaren Entwässerungszeit ruht und somit während dieser Zeit die Flüssigkeit aus dem Flotat austreten kann. Im einfachsten Fall ist die Entwässerungszone durch eine sich an den Flotatbereich anschließende aufsteigende Rampe gebildet.

Im Fall der physikalischen Flotationseinheit ist zweckmäßigerweise vorgesehen, daß das Flotat aus der Entwässerungszone in die thermische Flotationseinheit überführbar ist. Vorzugsweise erfolgt dies nicht direkt, sondern über einen dazwischengeschalteten Schlammpuffer, welcher das diesem chargenweise von der physikalischen Flotationseinheit zugeführte Flotat zwischenspeichert, rührt und homogenisiert und kontinuierlich der thermischen Flotationseinheit zuführt.

Im Fall der thermischen Flotationseinheit ist vorgesehen, daß die sich bildende Flotatphase nach Durchlaufen der Entwässerungszone direkt einer Nachentwässerung zuführbar ist.

Weitere Merkmale und Vorteile sind Gegenstand der nachfolgenden Beschreibung sowie der zeichnerischen Darstellung eines Ausführungsbeispiels. In der Zeichnung zeigen:
- Fig. 1: eine schematische Darstellung einer erfindungsgemäßen Vorrichtung;
- Fig. 2: eine perspektivische Darstellung eines Ausführungsbeispiels eines erfindungsgemäßen Fremdschmutzabscheiders;
- Fig. 3: eine Seitenansicht einer Schwimmpumpe;
- Fig. 4: eine Draufsicht auf die Schwimmpumpe gemäß Fig. 3;
- Fig. 5: eine perspektivische Darstellung eines oberen Teils einer Flotationseinheit mit angehobener Räumeinrichtung und
- Fig. 6: eine schematische Darstellung ähnlich Fig. 5 mit das Flotat abräumender Räumeinrichtung.

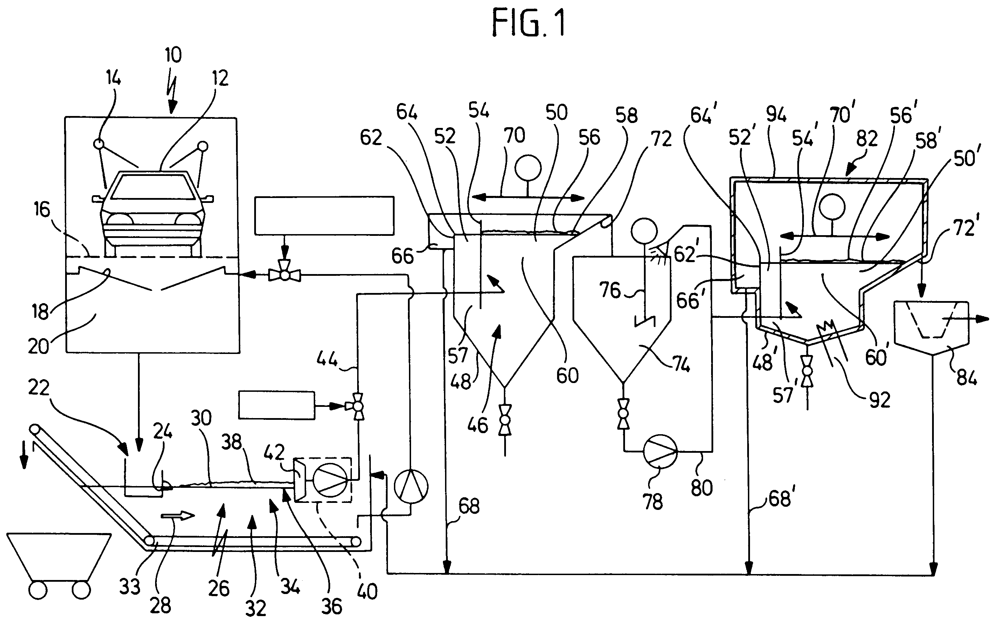

Eine schematisch in Fig. 1 dargestellte erfindungsgemäße Vorrichtung umfaßt eine als Ganzes mit 10 bezeichnete Hydrowachsspritzkabine, in welcher Fahrzeugkarosserien 12 durch Spritzeinrichtungen 14 eine Endkonservierung mit Wachs erhalten. Das am Substrat vorbei gespritzte Wachs tritt durch einen Gitterboden 16 hindurch in eine von Umwälzwasser eines Umwälzkreislaufs gespülte Auswaschung 18, wird in einem Sammelraum 20 gesammelt und einem als Ganzes mit 22 bezeichneten Fremdschmutzabscheider zugeführt. Von diesem Fremdschmutzabscheider 22 tritt das Wachs aus der Spritzkabine 10 mitführende Umwälzwasser über einen Einlauf 24 in einen als Ganzes mit 26 bezeichneten Systemtank auf einer Seite derselben, ein, wobei das in den Systemtank 26 eintretende Umwälzwasser eine Strömungsrichtung 28 aufweist, welche ungefähr parallel zu einer Umwälzwasseroberfläche 30 verläuft.

Im Anschluß an den Einlauf 24 ist in dem ein Bad 32 des Umwälzwassers umfassenden Systemtank 26 eine Separationszone 34 vorgesehen, in deren Verlauf in dem Umwälzwasser eine Separation des Wachsoversprays dadurch eintritt, daß feine Wachspartikel in eine oberflächennahe Schicht 36 aufschwimmen und zusammen mit sich ebenfalls auf der Umwälzwasseroberfläche 30 bildendem Schaum eine Schwimmschicht 38 bilden, während andere grobe Schmutzpartikel auf dem Boden des Systemtanks 26 absinken und mit einem Bodenkratzband 33 entfernt werden.

Die Schwimmschicht 38 und die oberflächennahe Schicht 36 werden im Anschluß an die Separationszone 24 von einer auf der dem Fremdschmutzabscheider 22 gegenüberliegenden Seite der Separationszone 34 angeordneten Schwimmpumpe 40 mit einem Einlaß 42 abgesaugt, wobei der Einlaß 42 als schwimmende Phase des Systemtanks 26 die Schwimmschicht 38 gemeinsam mit der oberflächennahen Schicht 36 bei der Absaugung erfaßt.

Von der Schwimmpumpe 40 wird die im Systemtank 26 schwimmende Phase über eine Leitung 44 einer als Ganzes mit 46 bezeichneten ersten oder physikalischen Flotationseinheit zugeführt. Diese erste Flotationseinheit 46 umfaßt einen Flotationsbehälter 48, in welchem ein Flotationsbereich 50 und ein Klarphasenbereich 52 angeordnet sind, die beide durch eine in den Flotationsbehälter 48 eintauchende Trennwand 54 voneinander getrennt sind, wobei zwischen der Trennwand 54 und dem Flotationsbehälter 48 eine Unterströmöffnung 57 vorgesehen ist, durch welche aus dem Flotationsbereich 50 Klarphase in den Klarphasenbereich 52 übertreten kann.

Die Leitung 44 mündet dabei in den Flotationsbereich 50, in welchem eine physikalische Trennung bei derselben Temperatur wie im Systemtank 26 der schwimmenden Phase des Systemtanks 26 dadurch erfolgt, daß Wachspartikel und Schaum als Flotat 56 aufschwimmen und eine Schicht bilden, die auf einer Oberfläche 58 einer flüssigen Phase 60 schwimmt, wobei sich aus dieser flüssigen Phase 60 eine Klarphase bildet, welche über die Unterströmöffnung 57 in den Klarphasenbereich 52 eintritt.

Im Klarphasenbereich 52 ist eine Überströmwand 62 vorgesehen, durch deren Oberkante 64 die Oberfläche 58 der flüssigen Phase und der Klarphase festgelegt sind. Die Klarphase im Klarphasenbereich 52 strömt dabei über die Oberkante 64 der Überströmwand 62 in einen Ablauf 66 und wird von diesem über eine Klarphasenleitung 68 wieder in den Systemtank 26 eingeleitet.

Die im Flotationsbereich 50 auf der Oberfläche 58 aufschwimmende Schicht des Flotats 56 wird von einer Räumeinrichtung 70 abgeräumt, in eine Entwässerungszone 72 bewegt und von dort chargenweise in einen Pufferbehälter 74 abgegeben, in welchem vorzugsweise ein Rühren des Flotats 56 mit einer Rühreinrichtung 76 erfolgt, um das Flotat 56 homogen zu halten. Zur Verhinderung von Schaumbildung im Pufferbehälter 74 ist dieser zusätzlich mit einer Bedüsung 75 zur Schaumzerstörung versehen, welche mittels einer Pumpe 78 und einer Leitung 80 betreibbar ist.

Aus dem Pufferbehälter 74 ist das Flotat 56 mittels der Pumpe 78 über die Leitung 80 einer zweiten oder thermischen Flotationseinheit 82 zuführbar, welche im Prinzip genau gleich wie die Flotationseinheit 46 ausgebildet ist und durch thermische Emulsionsspaltung eine Flotatphase erzeugt, welche in eine Nachentwässerungseinheit 84 abführbar ist. Ferner bildet sich in der Nachentwässerungseinheit 84 ebenfalls noch Klarphase, welche in die Klarphasenleitung 68 und durch diese in den Systemtank 26 einleitbar ist.

Bei der zweiten Flotationseinheit 82 sind diejenigen Teile, die mit denen der ersten Flotationseinheit identisch sind, mit denselben Bezugszeichen und zusätzlich noch mit einem ' versehen, so daß hinsichtlich der Beschreibung dieser Teile auf die Ausführungen zum ersten Ausführungsbeispiel verwiesen werden kann.

Im Gegensatz zur ersten Flotationseinheit 46 umfaßt die zweite Flotationseinheit 82 eine Heizung 92 im Flotationsbereich 50' und ein Gehäuse 94 welches die zweite Flotationseinheit 82 umgibt und diese thermisch gegenüber der Umgebung isoliert.

In der zweiten Flotationseinheit ist das Flotat 56 aus der ersten Flotationseinheit auf eine Temperatur zwischen ungefähr 50°C und ungefähr 80°C aufheizbar, während im Systemtank 26 und in der ersten Flotationseinheit 46 keine Aufheizung erfolgt und Temperaturen des Umwälzwassers und der schwimmenden Phase zwischen ungefähr 15°C und ungefähr 20°C vorliegen.

Je nach Wachsart wird über eine Dosiereinrichtung 88 und eine Zuführeinrichtung 90 bereits in der Leitung 44 Phasentrennmittel zugegeben.

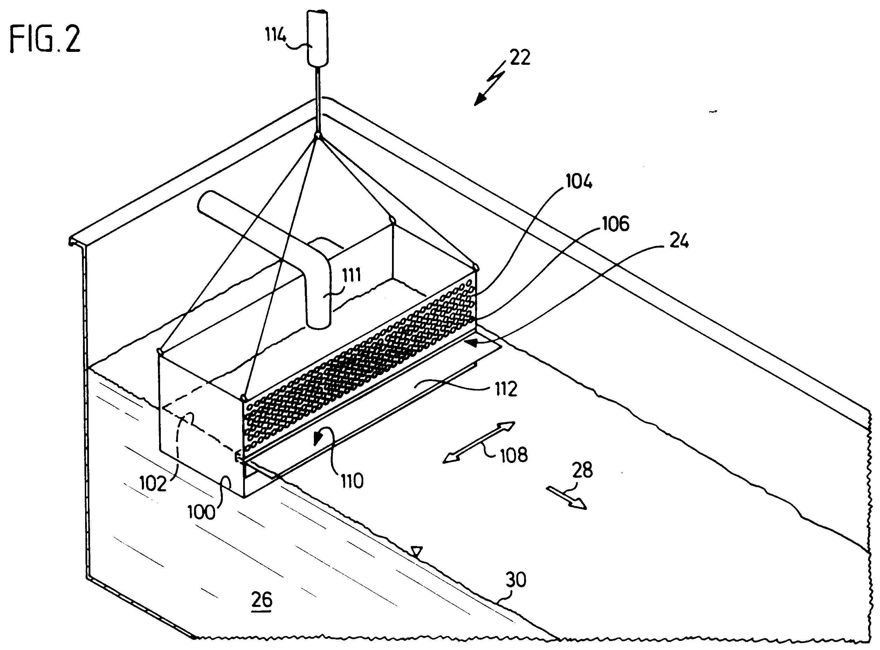

Ein bevorzugtes Ausführungsbeispiel eines Fremdschmutzabscheiders 22, dargestellt in Fig. 2 umfaßt eine Auffangwanne 100, welche im unteren Bereich bis zu einem Flüssigkeitsspiegel 102 des Umwälzwassers im Fremdschmutzabscheider 22 geschlossen ist, wobei zur Festlegung dieses Flüssigkeitsspiegels 102 ein oberhalb dessen an einer Seitenwand angeordnetes, als Lochblech mit Öffnungen 106 ausgebildetes Rückhalteelement 104 dient. Der Flüssigkeitsspiegel 102 ist dabei durch die untersten Öffnungen 106 des Rückhalteelements festgelegt.

Das Rückhalteelement 104 ist so angeordnet, daß durch die Öffnungen 106 ein Einströmen von Umwälzwasser aus der Auffangwanne 100 in den Systemtank 26 erfolgt und zwar verteilt über eine parallel zur Umwälzwasseroberfläche 30 verlaufende Querrichtung 108, welche quer zur Strömungsrichtung 28 verläuft.

Um die Strömungsrichtung 28 im wesentlichen parallel zur Umwälzwasseroberfläche 30 zu halten, ist unterhalb der den Einlauf 24 bildenden Öffnungen 106 des Rückhalteelements 104 ein Leitblech 110 mit einer im wesentlichen parallel zur Umwälzwasseroberfläche 30 ausgerichteten Leitfläche 112 vorgesehen, welche sich ebenfalls über die Querrichtung 108 unterhalb der Öffnungen 106 erstreckt und somit dem über den Einlauf 24 in den Systemtank 26 einströmenden Umwälzwasser die Strömungsrichtung 28 verleiht, die ungefähr parallel zur Umwälzwasseroberfläche 30 verläuft.

Das aus der Spritzkabine 10 kommende Umwälzwasser wird über einen Einlaufstutzen 111 der Auffangwanne 100 zugeführt, verteilt sich in der Auffangwanne, wobei sich unten in der Auffangwanne 100 nichtschwimmende Grobpartikel, wie beispielsweise Schrauben etc. absetzen und strömt dann aus der Auffangwanne 100 durch die Öffnungen 106 des Lochblechs 104 in den Systemtank 26, wobei das Lochblech 104 auf dem Flüssigkeitsspiegel 102 in der Auffangwanne aufschwimmenden Grobschmutz, beispielsweise Pappbecher oder ähnliche schwimmfähige, Teile zurückhält.

Um stets sicher zu stellen, daß der Einlauf 24 unterstützt durch die Leitfläche 112 des Leitblechs 110 eine im wesentlichen parallel zur Umwälzwasseroberfläche 30 gerichtete Strömung 28 in dem Systemtank erzeugt, ist der gesamte Fremdschmutzabscheider 22 mittels einer Hubeinrichtung 114 höhenverstellbar im Systemtank 26 gehalten und wird stets so verstellt, daß die Leitfläche 112 geringfügig unter der Umwälzwasseroberfläche 30 im Systemtank 26 steht und somit der Flüssigkeitsspiegel 102 ungefähr auf gleicher Höhe wie die Umwälzwasseroberfläche 30 steht oder geringfügig höher als diese steht.

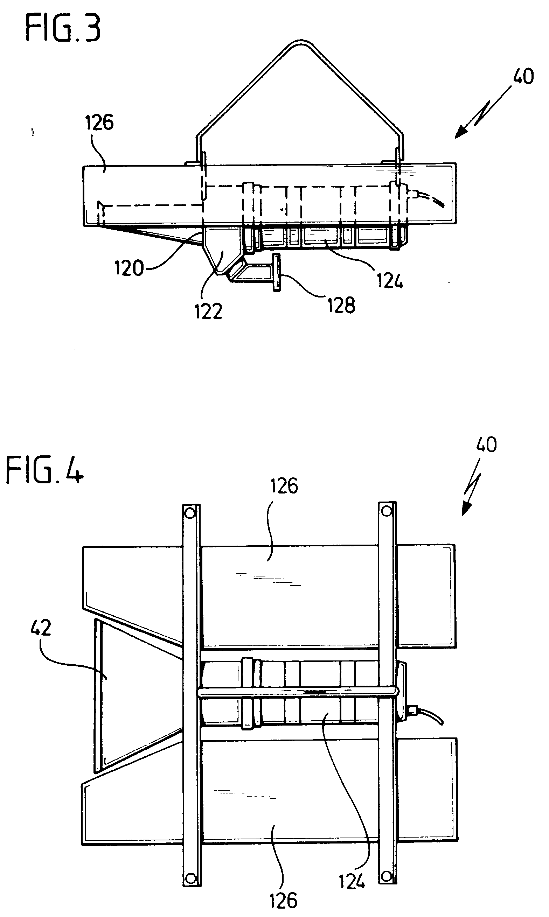

Wie in Fig. 3 und 4 dargestellt, umfaßt die als Ganzes mit 40 bezeichnete Schwimmpumpe den Einlaß 42, welcher der Separationszone 34 und auch dem Fremdschmutzabscheider 22 zugewandt angeordnet ist und sich konisch bis zu einem Pumpeneinlaß 120 eines Pumpaggregats 122 verjüngt, wobei das Pumpaggregat 122 durch einen Motor 124 angetrieben ist. Das Pumpaggregat 122 und der Motor 124 werden durch beiderseits derselben angeordnete Schwimmkörper 126 schwimmend im Systemtank 26 gehalten und zwar so, daß der Einlaß 42 die in der Separationszone 34 aufgeschwommene Phase, nämlich die oberflächennahe Schicht 36 und die Schwimmschicht 38, erfaßt und dem Pumpeneinlaß 120 zuführt. Die aufgeschwommene Phase wird dann vom Pumpaggregat 122 über einen Auslaßstutzen 128 abgeführt.

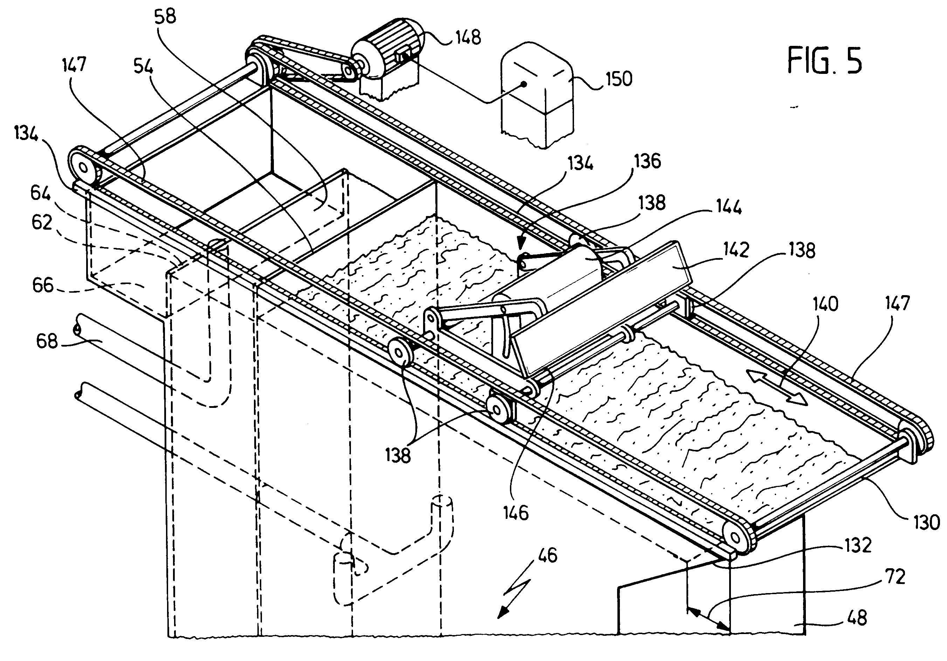

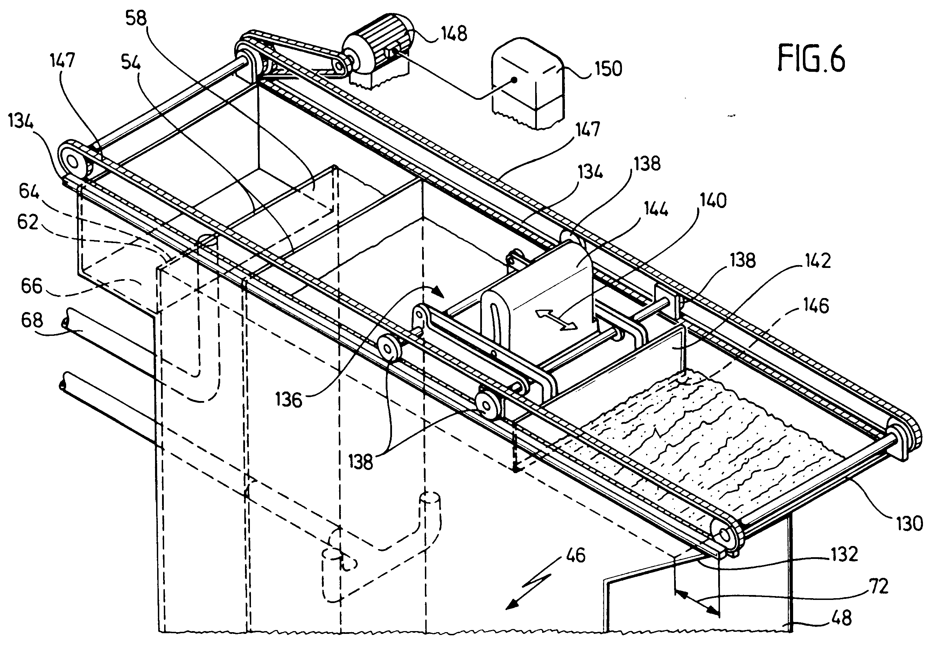

Wie in Fig. 5 und 6 dargestellt, umfaßt jede der Flotationseinheiten 46 den Flotationsbehälter 48 mit der Entwässerungszone 72, welche durch einen ausgehend von der Oberfläche 58 schräg nach oben bis zu einer Abwurfkante 130 ansteigenden Wandbereich 132 des Flotationsbehälters 48 gebildet ist.

Die von der Flotationseinheit 46 umfaßte Räumeinrichtung weist zwei parallel nebeneinander angeordnete Laufschienen 134 auf, auf welchen ein Räumwagen 136 mit Laufrollen 138 geführt und parallel zu den Laufschienen 134 in einer Räumrichtung 140 von der Trennwand 54 in Richtung auf den Wandbereich 132 und umgekehrt bewegbar ist. Der Räumwagen 136 trägt dabei ein Räumschild 142, welches mittels einer auf dem Räumwagen 136 angeordneten Hubeinrichtung 144 anhebbar und absenkbar gehalten ist, wobei das Räumschild mit einer Unterkante 146 im abgesenkten Zustand in die flüssige Phase 60 eintaucht, während im angehobenen Zustand die Unterkante 146 über die auf der Oberfläche 58 schwimmende Schicht des Flotats 56 hinwegbewegbar ist.

Die Bewegung des Räumwagens 136 in Räumrichtung 140 und entgegengesetzt zu dieser erfolgt über nahe den Laufschienen 134 angeordnete Zugketten 147, die über einen Zugantrieb 148 antreibbar sind.

Sowohl der Zugantrieb 148 als auch die Hubeinrichtung 144 sind so durch eine Steuerung 150 ansteuerbar, daß in variabel vorgebbaren Zeitintervallen das Räumschild 142 im angehobenen Zustand bis zur Trennwand 54 entgegengesetzt zur Räumrichtung 140 bewegt wird, dann im abgesenkten Zustand in Räumrichtung 140 die Schicht des Flotats 56 von der Oberfläche 58 abräumt und in Richtung des Entwässerungsbereichs 72 bewegt und dabei im Entwässerungsbereich 72 die Flotatschicht auf den schrägen Wandbereich 132 schiebt.

Die Entwässerungszone 72 wird entweder mit geringer Geschwindigkeit durchlaufen, so daß eine ausreichende Zeit zur Entwässerung des Flotats 56 zur Verfügung steht oder das Räumschild 142 wird in seiner Bewegung in Räumrichtung 140 an einer Stelle im Entwässerungsbereich 72 angehalten, so daß über den Wandbereich 132 Flüssigkeit aus dem abgeräumten Flotat 56 in die flüssige Phase 60 im Flotationsbehälter 48 zurückströmen kann.

Nach der Entwässerung des Flotats 56 im Entwässerungsbereich 72 bewegt das Räumschild 142 dieses weiter bis zur Abwurfkante 130, von welcher ausgehend die Flotatschicht in den Pufferbehälter 74 fällt, in welchem über die Rühreinheit 76 eine gleichmäßige Vermischung und Zwischenspeicherung vor dem kontinuierlichen Einbringen des Flotats 56 in die zweite Flotationsheit 82 erfolgt, in welcher in gleicher Weise wie bei der ersten Flotationseinheit 46 ein Abräumen und Entwässern der sich bildenden Flotatphase durchführbar ist.

Diese Flotatphase wird dann beispielsweise in eine Filtereinrichtung als Nachentwässerungseinheit 84 abgegeben.

## Patentansprüche

1. Vorrichtung zum Austragen von Partikeln aus Umwälzwasser von Spritzkabinen, umfassend einen Systemtank (26), welchem das von der Spritzkabine (10) kommende Umwälzwasser über einen Einlauf (24) zuführbar ist, wobei in dem Systemtank (26) die Partikel in eine oberflächennahe Schicht (36) aufschwimmen, und einen im Systemtank (26) angeordneten Einlaß (42) für eine die oberflächennahe Schicht (36) umfassende schwimmende Phase (36, 38)
**dadurch gekennzeichnet,** daß in dem Systemtank (26) auf den Einlauf (24) folgend eine Separationszone (34) vorgesehen ist, in welcher die aus Wachspartikeln gebildeten Partikel in die oberflächennahe Schicht (36) aufschwimmen, daß auf einer dem Einlauf (24) gegenüberliegenden Seite der Separationszone (34) der Einlaß (42) angeordnet ist und daß der Einlaß (42) als die die oberflächennahe Schicht (36) umfassende schwimmende Phase (36, 38) absaugender Einlaß einer Absaugung (40) ausgebildet ist.

2. Vorrichtung nach Anspruch 1, dadurch gekennzeichnet, daß der Einlaß (42) so in dem Systemtank (26) angeordnet ist, daß mit diesem eine Absaugung der schwimmenden Phase (36, 38) unabhängig von dem Stand der Umwälzwasseroberfläche (30) im Systemtank (26) erfolgt.

3. Vorrichtung nach Anspruch 2, dadurch gekennzeichnet, daß in dem Systemtank (26) eine den Einlaß (42) aufweisende Schwimmpumpe (40) angeordnet ist.

4. Vorrichtung nach einem der voranstehenden Ansprüche, dadurch gekennzeichnet, daß dem Einlauf (24) ein Fremdschmutzabscheider (22) vorgeschaltet ist.

5. Vorrichtung nach Anspruch 4, dadurch gekennzeichnet, daß der Fremdschmutzabscheider (22) absinkende und aufschwimmende Grobpartikel aus dem Umwälzwasser abtrennt.

6. Vorrichtung nach Anspruch 5, dadurch gekennzeichnet, daß der Fremdschmutzabscheider (22) eine Wanne (100) zur Aufnahme von absinkendem Grobschmutz aufweist.

7. Vorrichtung nach Anspruch 5 oder 6, dadurch gekennzeichnet, daß ein über einem Flüssigkeitsspiegel (102) aufschwimmende Grobpartikel zurückhaltendes Element (104) angeordnet ist.

8. Vorrichtung nach Anspruch 7, dadurch gekennzeichnet, daß das Element (104) Öffnungen (106) für das Umwälzwasser aufweist.

9. Vorrichtung nach Anspruch 7 oder 8, dadurch gekennzeichnet, daß das Element (104) den Einlauf (24) in den Systemtank (26) bildet.

10. Vorrichtung nach einem der voranstehenden Ansprüche 4 bis 9, dadurch gekennzeichnet, daß der Einlauf (24) so ausgebildet ist, daß er eine ungefähr parallel zu Umwälzwasseroberfläche (30) im Systemtank (26) gerichtete Einlaufströmung (28) erzeugt.

11. Vorrichtung nach Anspruch 10, dadurch gekennzeichnet, daß der Einlauf (24) mit einem die Einlaufströmung (28) erzeugenden Leitblech (110) versehen ist.

12. Vorrichtung nach Anspruch 10 oder 11, dadurch gekennzeichnet, daß der Einlauf (24) sich in einer Querrichtung (108) zur Strömungsrichtung (28) ungefähr parallel zur Umwälzwasseroberfläche (30) erstreckt.

13. Vorrichtung nach einem der Ansprüche 4 bis 12, dadurch gekennzeichnet, daß in dem Fremdschmutzabscheider (22) ein Flüssigkeitsspiegel (102) des Umwälzwassers auf einem festgelegten Niveau steht.

14. Vorrichtung nach Anspruch 13, dadurch gekennzeichnet, daß der Flüssigkeitsspiegel (102) im Fremdschmutzabscheider (22) auf gleicher Höhe wie die Umwälzwasseroberfläche (30) im Systemtank (26) oder geringfügig höher gehalten ist.

15. Vorrichtung nach einem der voranstehenden Ansprüche, dadurch gekennzeichnet, daß die im Systemtank (26) aufschwimmende Phase einer physikalischen Flotationseinheit (46) zuführbar ist, in welcher durch eine physikalische Emulsionsspaltung Wachspartikel als Flotat (56) aufschwimmen und eine Klarphase entsteht.

16. Vorrichtung nach einem der voranstehenden Ansprüche, dadurch gekennzeichnet, daß eine thermische Flotationseinheit (82) vorgesehen ist in welcher durch eine thermische Emulsionsspaltung eine Phasentrennung erfolgt, bei welcher Wachspartikel als Flotatphase aufschwimmen und eine Klarphase entsteht.

17. Vorrichtung nach Anspruch 16, dadurch gekennzeichnet, daß mittels einer Heizung (92) in der thermischen Flotationseinheit (82) ein Aufheizen der zu spaltenden Phase auf eine Temperatur zwischen ungefähr 50°C und ungefähr 80°C erfolgt.

18. Vorrichtung nach Anspruch 17, dadurch gekennzeichnet, daß die thermische Flotationseinheit (82) in einem Gehäuse (94) gekapselt ist.

19. Vorrichtung nach Anspruch 18, dadurch gekennzeichnet, daß das Gehäuse (94) thermisch isolierend ausgebildet ist.

20. Vorrichtung nach einem der Ansprüche 15 bis 19, dadurch gekennzeichnet, daß die zu spaltende Phase in einen Flotationsbereich (50) der Flotationseinheit (46) einleitbar ist, in welchem die Wachspartikel zum Flotat (56) aufschwimmen.

21. Vorrichtung nach einem der Ansprüche 15 bis 20, dadurch gekennzeichnet, daß in der Flotationseinheit (46) eine Räumeinrichtung (70) für das Flotat (56) vorgesehen ist.

22. Vorrichtung nach einem der Ansprüche 15 bis 21, dadurch gekennzeichnet, daß die Flotationseinheit (46) eine Steuerung (150) umfaßt, welche die Räumeinrichtung (70) so steuert, daß sie das Flotat (56) in Intervallen abräumt.

23. Vorrichtung nach Anspruch 22, dadurch gekennzeichnet, daß die Flotationseinheit (46) eine Entwässerungszone (72) aufweist und die Räumeinrichtung (70) das Flotat in die Entwässerungszone (72) überführt.

24. Vorrichtung nach Anspruch 23, dadurch gekennzeichnet, daß das Flotat (56) in der Entwässerungszone (72) während einer einstellbaren Entwässerungsdauer verbleibt.

25. Vorrichtung nach Anspruch 24, dadurch gekennzeichnet, daß das Flotat (56) in der Entwässerungszone (72) während einer vorgebbaren Entwässerungszeit ruht.

26. Vorrichtung nach einem der Ansprüche 23 bis 25, dadurch gekennzeichnet, daß die Entwässerungszone (72) durch eine sich an den Flotatbereich (50) anschließende aufsteigende Rampe (132) gebildet ist.

27. Vorrichtung nach einem der Ansprüche 23 bis 26, dadurch gekennzeichnet, daß das Flotat (56) aus der Entwässerungszone (72) in der zweiten Flotationseinheit (82) über einen Schlammpuffer (74) zuführbar ist.

## Claims

1. Apparatus for removing particles from circulating water from spray booths, comprising a system tank (26), the circulating water coming from the spray booth (10) being feedable to said system tank via an inlet (24), and the particles floating up into a layer (36) near the surface in the system tank (26), and an intake (42) for a floating phase (36, 38) comprising the layer (36) near the surface arranged in the system tank (26),
characterized in that there is provided in the system tank (26) following the inlet (24) a separation zone (34) in which the particles formed by wax particles float up into the layer (36) near the surface, in that the intake (42) is arranged on a side of the separation zone (34) opposite to the inlet (24), and in that the intake (42) is designed as intake of a suction means (40) drawing off by suction the floating phase (36, 38) comprising the layer (36) near the surface.

2. Apparatus as defined in claim 1, characterized in that the intake (42) is arranged in the system tank (26) such that with this intake the floating phase (36, 38) is drawn off by suction irrespective of the level of the circulating water surface (30) in the system tank (26).

3. Apparatus as defined in claim 2, characterized in that a floating pump (40) comprising the intake (42) is arranged in the system tank (26).

4. Apparatus as defined in one of the preceding claims, characterized in that a separator (22) for foreign impurities is connected to the inflow side of the inlet (24).

5. Apparatus as defined in claim 4, characterized in that the separator (22) for foreign impurities separates coarse sinking and floating particles from the circulating water.

6. Apparatus as defined in claim 5, characterized in that the separator (22) for foreign impurities comprises a pan (100) for receiving coarse sinking waste.

7. Apparatus as defined in claim 5 or 6, characterized in that an element (104) is arranged for retaining coarse particles floating up above a liquid surface (102).

8. Apparatus as defined in claim 7, characterized in that the element (104) has openings (106) for the circulating water.

9. Apparatus as defined in claim 7 or 8, characterized in that the element (104) forms the inlet (24) into the system tank (26).

10. Apparatus as defined in one of the preceding claims 4 to 9, characterized in that the inlet (24) is designed such that it generates an inlet flow (28) directed approximately parallel to the surface (30) of the circulating water in the system tank (26).

11. Apparatus as defined in claim 10, characterized in that the inlet (24) is provided with a baffle plate (110) creating the inlet flow (28).

12. Apparatus as defined in claim 10 or 11, characterized in that the inlet (24) extends in a transverse direction (108) to the direction of flow (28) approximately parallel to the surface (30) of the circulating water.

13. Apparatus as defined in one of claims 4 to 12, characterized in that in the separator (22) for foreign impurities a liquid surface (102) of the circulating water is at a predetermined level.

14. Apparatus as defined in claim 13, characterized in that the liquid surface (102) in the separator (22) for foreign impurities is maintained at the same level as the surface (30) of the circulating water in the system tank (26) or slightly higher.

15. Apparatus as defined in one of the preceding claims, characterized in that the phase floating in the system tank (26) is feedable to a physical flotation unit (46) in which wax particles float to the top as flotate (56) due to a physical emulsion separation and a clear phase results.

16. Apparatus as defined in one of the preceding claims, characterized in that there is provided a thermal flotation unit (82) in which a phase separation takes place due to a thermal emulsion separation, with wax particles floating to the top as flotate phase and a clear phase resulting.

17. Apparatus as defined in claim 16, characterized in that the phase to be separated is heated up to a temperature of between approximately 50°C and approximately 80°C by means of a heating device (92) in the thermal flotation unit (82).

18. Apparatus as defined in claim 17, characterized in that the thermal flotation unit (82) is enclosed in a housing (94).

19. Apparatus as defined in claim 18, characterized in that the housing (94) is designed so as to be thermally insulated.

20. Apparatus as defined in one of claims 15 to 19, characterized in that the phase to be separated is introducible into a flotation zone (50) of the flotation unit (46) in which the wax particles float to the top to form the flotate (56).

21. Apparatus as defined in one of claims 15 to 20, characterized in that a removing device (70) for the flotate (56) is provided in the flotation unit (46).

22. Apparatus as defined in one of claims 15 to 21, characterized in that the flotation unit (46) comprises a control (150) for controlling the removing device (70) such that it removes the flotate (56) at intervals.

23. Apparatus as defined in claim 22, characterized in that the flotation unit (46) comprises a dewatering zone (72) and the removing device (70) transfers the flotate to the dewatering zone (72).

24. Apparatus as defined in claim 23, characterized in that the flotate (56) remains in the dewatering zone (72) during an adjustable dewatering time.

25. Apparatus as defined in claim 24, characterized in that the flotate (56) rests in the dewatering zone (72) during a predeterminable dewatering time.

26. Apparatus as defined in one of claims 23 to 25, characterized in that the dewatering zone (72) is formed by an ascending ramp (132) following the flotate zone (50).

27. Apparatus as defined in one of claims 23 to 26, characterized in that the flotate (56) is feedable from the dewatering zone (72) to the second flotation unit (82) via a sludge buffer (74).

## Revendications

1. Dispositif d'élimination de particules à partir d'eau de circulation de cabines de pulvérisation, comprenant un réservoir (26) auquel l'eau de circulation venant de la cabine de pulvérisation (10) peut être amenée par l'intermédiaire d'une entrée (24), les particules dans le réservoir (26) flottant dans une couche proche de la surface (36), et une admission (42) agencée dans le réservoir (26), pour une phase surnageante (36, 38) qui comporte la couche proche de la surface (36),
caractérisé en ce qu'il est prévu dans le réservoir (26), à la suite de l'entrée (24), une zone de séparation (34) dans laquelle les particules formées de particules de cire flottent dans la couche proche de la surface (36), en ce que l'admission (42) est agencée d'un côté de la zone de séparation (34) qui est à l'opposé de l'entrée (24) et en ce que l'admission (42) est réalisée sous la forme de l'admission d'une aspiration (40) qui aspire la phase surnageante (36, 38) comportant la couche proche de la surface (36).

2. Dispositif suivant la revendication 1, caractérisé en ce que l'admission (42) est agencée dans le réservoir (26) de façon qu'une aspiration par celle-ci de la phase surnageante (36, 38) ait lieu de manière indépendante de l'état de la surface d'eau de circulation (30) dans le réservoir (26).

3. Dispositif suivant la revendication 2, caractérisé en ce qu'une pompe flottante (40) présentant l'admission (42) est agencée dans le réservoir (26).

4. Dispositif suivant l'une des revendications précédentes, caractérisé en ce qu'un séparateur de saletés étrangères (22) est monté en amont de l'entrée (24).

5. Dispositif suivant la revendication 4, caractérisé en ce que le séparateur de saletés étrangères (22) isole de l'eau de circulation des particules grossières qui coulent et qui flottent.

6. Dispositif suivant la revendication 5, caractérisé en ce que le séparateur de saletés étrangères (22) comporte une cuve (100) destinée à recevoir les saletés grossières qui coulent.

7. Dispositif suivant l'une des revendications 5 et 6, caractérisé en ce qu'un élément (104) retenant les particules grossières flottant au-dessus d'un niveau de liquide (102) est disposé.

8. Dispositif suivant la revendication 7, caractérisé en ce que l'élément (104) présente des ouvertures (106) pour l'eau de circulation.

9. Dispositif suivant l'une des revendications 7 et 8, caractérisé en ce que l'élément (104) forme l'entrée (24) dans le réservoir (26).

10. Dispositif suivant l'une des revendications précédentes 4 à 9, caractérisé en ce que l'entrée (24) est réalisée de façon à produire un écoulement d'entrée (28) dirigé approximativement parallèlement à la surface d'eau de circulation (30) dans le réservoir (26).

11. Dispositif suivant la revendication 10, caractérisé en ce que l'entrée (24) est pourvue d'une tôle déflectrice (110) produisant un écoulement d'entrée (28).

12. Dispositif suivant l'une des revendications 10 et 11, caractérisé en ce que l'entrée (24) s'étend dans une direction transversale (108) par rapport à la direction d'écoulement (28) approximativement parallèlement à la surface d'eau de circulation (30).

13. Dispositif suivant l'une des revendications 4 à 12, caractérisé en ce qu'un niveau de liquide (102) de l'eau de circulation dans le séparateur de saletés étrangères (22) se trouve à un niveau fixé.

14. Dispositif suivant la revendication 13, caractérisé en ce que le niveau de liquide (102) dans le séparateur de saletés étrangères (22) est maintenu à la même hauteur que la surface d'eau de circulation (30) dans le réservoir (26) ou un peu plus haut.

15. Dispositif suivant l'une des revendications précédentes, caractérisé en ce que la phase surnageante dans le réservoir (26) peut être amenée à une unité de flottation physique (46) dans laquelle, par une séparation d'émulsion physique, des particules de cire flottent sous la forme d'un produit de flottation (56) et une phase limpide se forme.

16. Dispositif suivant l'une des revendications précédentes, caractérisé en ce qu'une unité de flottation thermique (82) est prévue, dans laquelle, par une séparation d'émulsion thermique, on obtient une séparation de phases dans laquelle des particules de cire flottent sous la forme d'une phase de produit de flottation et une phase limpide est obtenue.

17. Dispositif suivant la revendication 16, caractérisé en ce que, au moyen d'un chauffage (92) dans l'unité de flottation thermique (82), on obtient un chauffage de la phase à séparer à une température comprise entre environ 50°C et environ 80°C.

18. Dispositif suivant la revendication 17, caractérisé en ce que l'unité de flottation thermique (82) est encapsulée dans un boîtier (94).

19. Dispositif suivant la revendication 18, caractérisé en ce que le boîtier (94) est réalisé sous une forme thermiquement isolée.

20. Dispositif suivant l'une des revendications 15 à 19, caractérisé en ce que la phase à séparer peut être introduite dans une zone de flottation (50) de l'unité de flottation (46) dans laquelle les particules de cire flottent pour former un produit de flottation (56).

21. Dispositif suivant l'une des revendications 15 à 20, caractérisé en ce qu'un dispositif d'évacuation (70) pour le produit de flottation (56) est prévu dans l'unité de flottation (46).

22. Dispositif suivant l'une des revendications 15 à 21, caractérisé en ce que l'unité de flottation (46) comporte une commande (150) qui commande le dispositif d'évacuation (70) de façon qu'il décharge le produit de flottation (56) à intervalles.

23. Dispositif suivant la revendication 22, caractérisé en ce que l'unité de flottation (46) présente une zone de déshydratation (72) et en ce que le dispositif d'évacuation (70) transfère le produit de flottation dans la zone de déshydratation (72).

24. Dispositif suivant la revendication 23, caractérisé en ce que le produit de flottation (56) subsiste dans la zone de déshydratation (72) pendant une durée de déshydratation ajustable.

25. Dispositif suivant la revendication 24, caractérisé en ce que le produit de flottation (56) repose dans la zone de déshydratation (72) pendant une période de déshydratation prédéterminable.

26. Dispositif suivant l'une des revendications 23 à 25, caractérisé en ce que la zone de déshydratation (72) est formée par une rampe (132) ascendante qui se raccorde à la zone de produit de flottation (50).

27. Dispositif suivant l'une des revendications 23 à 26, caractérisé en ce que le produit de flottation (56) peut être amené de la zone de déshydratation (72) à la deuxième unité de flottation (82) par l'intermédiaire d'un réservoir tampon à boue (74).
